# EUROPÄISCHE PATENTSCHRIFT

(11) **EP 0 867 098 B1**
(45) Veröffentlichungstag und Bekanntmachung des Hinweises auf die Patenterteilung: **13.09.2000**
(21) Anmeldenummer: 96946041.9
(22) Anmeldetag: 05.12.1996
(51) Int. Cl.: H04Q 7/30, H04Q 7/26

(54) **TEILNEHMERANSCHLUSSNETZ FÜR DEN ANSCHLUSS VON TEILNEHMERSTATIONENAN EINE FERNMELDEVERMITTLUNGSSTELLE UNTER VERWENDUNG EINES FUNKSYSTEMS**
SUBSCRIBER CONNECTION NET FOR THE CONNECTION OF SUBSCRIBER STATIONS TO AN EXCHANGE USING A RADIO SYSTEM
RESEAU DE RACCORDEMENT D'ABONNES POUR LE RACCORDEMENT DE STATIONS D'ABONNES A UN CENTRAL DE TELECOMMUNICATION AU MOYEN D'UN SYSTEME RADIOPHONIQUE

(30) Priorität: 15.12.1995 DE 19547020
(43) Veröffentlichungstag der Anmeldung: 30.09.1998
(73) Patentinhaber: SIEMENS AKTIENGESELLSCHAFT, 80333 München (DE)
(72) Erfinder: LECHNER, Robert, A-3171 Böheimkirchen (AT); ROGASCH, Volker, D-17491 Greifswald (DE)
(86) Internationale Anmeldenummer: DE9602326
(87) Internationale Veröffentlichungsnummer: WO9723106

(56) Entgegenhaltungen:
- EP-A- 0 293 014
- EP-A- 0 473 355
- EP-A- 0 624 995

## Beschreibung

Die Erfindung betrifft ein Teilnehmeranschlußnetz für den Anschluß von Teilnehmerstationen an eine Fernmeldevermittlungsstelle, das ein Funksystem zur Herstellung der Anschlußverbindungen umfaßt, gemäß dem Oberbegriff des Patentanspruches 1.

Es ist demnach ein Funksystem vorausgesetzt, dessen Luftschnittstelle zwischen ortsfesten Teilnehmeranschlußeinheiten für Teilnehmerendgeräte bzw. mobilen Teilnehmerendgeräten und Funkbasisstationen besteht, die jeweils zur Bedienung mehrerer Teilnehmerendgeräte ausgelegt sind und über eine Übertragungsstrecke mit vermittlungsnahen Funksteuereinheiten in Verbindung stehen.

Die Verbindung eines Teilnehmerendgerätes mit der Vermittlungsstelle kann dabei wahlweise über wenigstens zwei der Funkbasisstationen hergestellt werden. Ferner ist es möglich, daß während einer bestehenden Verbindung unterbrechungsfrei ein Wechsel zu einer anderen Funkbasisstation möglich ist.

Für Kommunikationssysteme ganz allgemein und demnach für ein solches Teilnehmeranschlußsystem besteht die Forderung, daß der Ausfall einer Funktionseinheit nur für eine bestimmte Anzahl von Teilnehmern zum Wegfall einer Kommunikationsmöglichkeit bzw. zur Unterbrechung aktiver Verbindungen führen darf. Im konkreten Fall können dies beispielsweise 64 Teilnehmer sein. Eine weitere Forderung besteht darin, daß ein solcher Ausfall einer Funktionseinheit nur ein bestimmtes Ausmaß an Verkehrsverlusten nach sich ziehen darf, das durch den Betreiber in gewissen Grenzen festlegbar sein soll.

Die genannten Anforderungen sollen andererseits unter möglichst geringem Kostenaufwand für Herstellung und Entwicklung erzielt werden. Einem Konzept mit redundanten Funktionseinheiten oder vielen kleinen Funktionseinheiten, die nur eine geringe Anzahl von Teilnehmern bedienen, sind wegen der Herstellungskosten Grenzen gesetzt. Die Möglichkeit der Ersatzschaltung zur Aufrechterhaltung bestehender Verbindungen bei Ausfall einer Funktionseinheit ist, sofern davon eine größere Anzahl von Verbindungen betroffen sein soll, nur unter hohen Entwicklungskosten zu erreichen.

Bei einem bekannten Teilnehmeranschlußnetz der obengenannten Art, für das auch die Begriffe RLL (Radio Local Loop) oder RITL (Radio In The Loop) verwendet werden, hat jeder Teilnehmer wahlfrei Zugriff auf beliebige Basisstationen und darüber hinaus ist es möglich, im Zuge einer bestehenden Verbindung unterbrechungsfrei von einer Basisstation zur anderen zu wechseln, wenn die Qualität der Funkverbindung nachgelassen hat (Ericsson Review 2, 1994, A DECT Solution For Radio Access Application). Bei diesem bekannten Teilnehmeranschlußnetz bestehen zwischen einer zentralen Einrichtung des Funksystems und der Fernmeldevermittlungsstelle Übertragungsstrecken für 2-Mbit/s-Signale. Der Ausfall einer der Übertragungsstrecken führt zu einem Totalausfall der über sie erreichbaren Teilnehmerstationen.

Darüber hinaus offenbart die europäische Patentanmeldung EP-A-0 473 355 ein Teilnehmeranschlußnetz für den Anschluß einer Mehrzahl von Teilnehmerstationen an eine Vermittlungstelle, das auf einem verteilten Vermittlungssystem beruht.

Die Aufgabe der Erfindung besteht darin, ein Teilnehmeranschlußnetz der im Oberbegriff des Patentanspruchs 1 angegebenen Art dahingehend auszugestalten, daß unter den obengenannten Aspekten, nämlich möglichst geringem Entwicklungs- und Herstellungsaufwand, Totalausfälle auf höchstens vorgegebene Mengen von Teilnehmerstationen beschränkt sind und auch ein Retten bestehender Verbindungen bei Ausfall von Funktionseinheiten in bestimmtem Umfang möglich ist.

Diese Aufgabe wird mit Hilfe der im Kennzeichen des Patentanspruches 1 angegebenen Merkmale gelöst.

Es ist demnach als Bestandteil der Funksteuereinheiten vermittlungsstellenseitig wenigstens eine als Ausfalleinheit konzipierte Schnittstelleneinheit für den Anschluß einer zur Fernmeldevermittlungsstelle führenden Verbindungsleitung vorgesehen, deren Datenbasis die Teilnehmerdaten enthält. Ferner sind teilnehmerseitig wenigstens zwei Schnittstelleneinheiten für den Anschluß einer mit einer Funkbasisstation verbindenden Übertragungsstrecke vorgesehen, deren Datenbasis die Daten der betreffenden Funkbasisstationen enthält. Ferner ist eine Schnittstelleneinheit für den Anschluß eines Systems für Betriebs- und Wartungsaufgaben vorgesehen, von dem aus unter anderem die Eingabe von Teilnehmerdaten bzw. Daten der Funkbasisstationen in die Datenbasis der genannten Schnittstelleneinheiten erfolgt. Schließlich ist als weiterer Bestandteil der Funksteuereinheiten ein Mehrfach-Bussystem zur Verbindung der Schnittstelleneinheiten vorgesehen, auf deren Einzelbus-Systeme die Schnittstelleneinheiten in unterschiedlichem Umfang Zugriff haben.

Aufgrund der erfindungsgemäßen Konstellation kann der Ausfall einer vermittlungsseitigen Schnittstelle nur zum Verlust der über sie geleiteten Verbindungen führen, womit jedoch, da diese Schnittstelleneinheiten als Ausfalleinheit konzipiert sind, die Anforderungen an die Obergrenze bei Totalausfall eingehalten ist.

Bei Ausfall einer teilnehmerseitigen Schnittstelleneinheit bzw. der diese mit einer Funkbasisstation verbindenden Übertragungsstrecke, ein Fehlerfall mit dem wesentlich häufiger zu rechnen ist als mit dem Ausfall einer vermittlungsseitigen Schnittstelleneinheit, besteht nach wie vor für sämtliche Teilnehmer die Möglichkeit eines Verbindungsaufbaus, wenn auch bei verringerter Verkehrsgüte. Es ist dabei weder eine Redundanz vorzusehen, noch zum Retten bestehender Verbindungen ein sogenannter hot standby Betrieb einzurichten, womit die erfindungsgemäße Lösung auch entsprechend kostengünstig ist.

In einem Unteranspruch ist eine vorteilhafte Funktionsverteilung von Vorgängen beim Verbindungsaufbau aufgrund einer abgehenden und einer ankommenden Belegung angegeben, die zu einer relativ einfachen Struktur der Schnittstelleneinheiten führt.

Nachstehend wird die Erfindung anhand eines Ausführungsbeispieles unter Bezugnahme auf eine Zeichnung näher erläutert.

In der Zeichnung zeigen:

Figur 1 das Übersichtsschaltbild eines Teilnehmeranschlußnetzes, in dem die Erfindung realisiert ist.

Figur 2 das Blockschaltbild einer gemäß der Erfindung aufgebauten Funksteuereinheit eines solchen Anschlußnetzes.

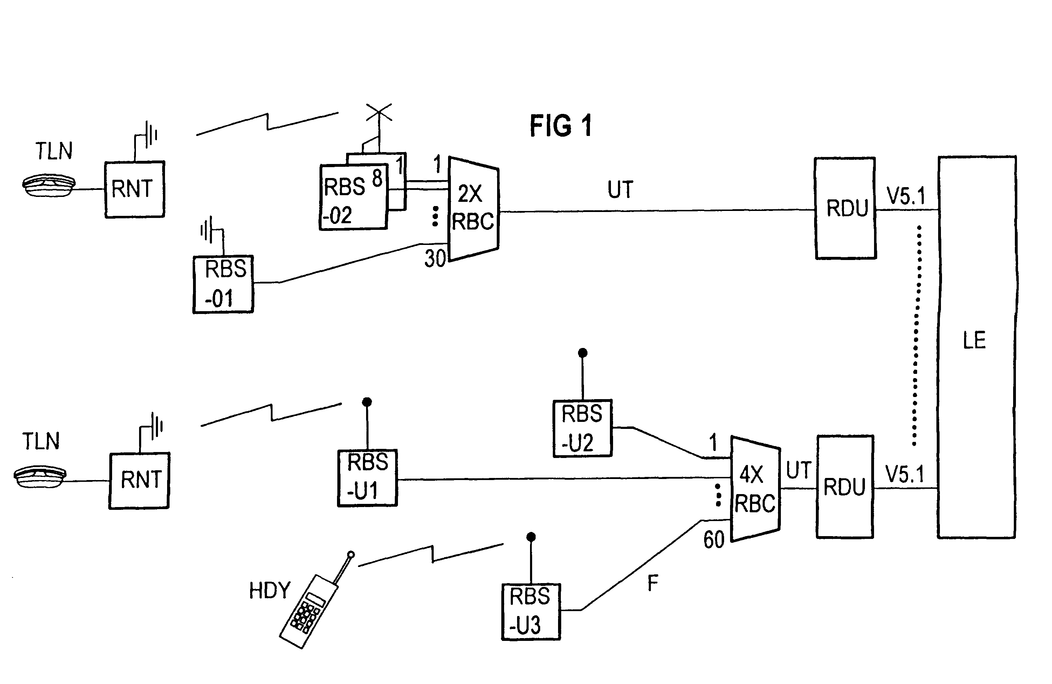

Das Teilnehmeranschlußnetz gemäß Figur 1 dient dem Anschluß von Teilnehmerstationen an eine Fernmeldevermittlungsstelle LE.

Bei den Teilnehmerstationen kann es sich um ortsfeste Teilnehmergeräte TLN handeln, die in diesem Falle an Teilnehmeranschlußeinheiten RNT angeschlossen sind, oder aber um mobile Teilnehmerendgeräte HDY. Zwischen diesen Teilnehmeranschlußeinheiten RNT bzw. zwischen den mobilen Teilnehmerendgeräten HDY und Funkbasisstationen RBS besteht ein Funksystem. Die Teilnehmeranschlußeinheiten RNT sind in diesem Zusammenhang mit Richtantennen ausgestattet. Die Funkbasisstationen können in diesem Zusammenhang Rundstrahlantennen aufweisen, wie dies bei den im unteren Teil der Figur dargestellten Funkbasisstationen RBS-ul bis RBS-u3 dargestellt ist.

Insbesondere für Entfernungsbereiche, die größer als 1 km sind, weisen die Funkbasisstationen ebenfalls Richtantennen auf, wie die im oberen Teil der Figur dargestellte Funkbasisstation RBS-ol.

Vorzugsweise bei Entfernungen, die kleiner als 1 km sind, weisen die Funkbasisstationen Sektorantennen auf, die nur einen Sektor des Versorgungsgebiets erfassen, siehe eine der im oberen Teil der Figur dargestellten Funkbasisstationen RBS-o2. Die Verwendung solcher Sektorantennen anstelle einer den gesamten Versorgungsbereich erfassenden Antenne führt dazu, daß von den insgesamt zur Verfügung stehenden Funkfrequenzen bzw. von den mit ihnen gebildeten Funkkanälen zu einem hohen Prozentsatz mehrfach Gebrauch gemacht werden kann, womit das zur Verfügung stehende Funkfrequenzspektrum besser ausgenutzt ist.

Die Funkbasisstationen schließen die funkspezifischen Prozeduren zu den Teilnehmeranschlußeinheiten RNT bzw. zu den mobilen Endgeräten HDY hin ab und bilden U-Schnittstellen auf Kupferleitungen, über die sie an Einheiten RBC angeschlossen sind, die als Multiplexer für die Information einer Vielzahl solcher angeschlossener Funksteuereinheiten RBS dienen.

Die Einheiten RBC können vermittlungsfern, d. h. in einem Abstand bis zu 4 km von der Fernmeldevermittlungsstelle LE angeordnet sein, siehe oberer Teil der Figur 1, oder aber sich im Nahbereich der Vermittlungsstelle befinden, siehe unterer Teil der Figur 1. Sie sind über eine Übertragungsstrecke UT mit in jedem Falle vermittlungsnah angeordneten Funksteuereinheiten RDU verbunden. Bei der Übertragungsstrecke UT, die in der Praxis eine Übertragungsbandbreite von 2 Mbit/s aufweist, kann es sich um Kupferleitungen, Lichtleiter oder um eine Richtfunkstrecke handeln.

Die Funksteuereinheiten RDU dienen der Steuerung des insoweit beschriebenen Anschlußnetzes. Sie sind über V5.1-Schnittstellen oder V5.2-Schnittstellen und einer Mehrzahl von Kupferleitungen mit der Fernmeldevermittlungsstelle LE verbunden. In der Praxis kann eine größere Mehrzahl, z. B. 16 solcher Funksteuereinheiten vorgesehen sein.

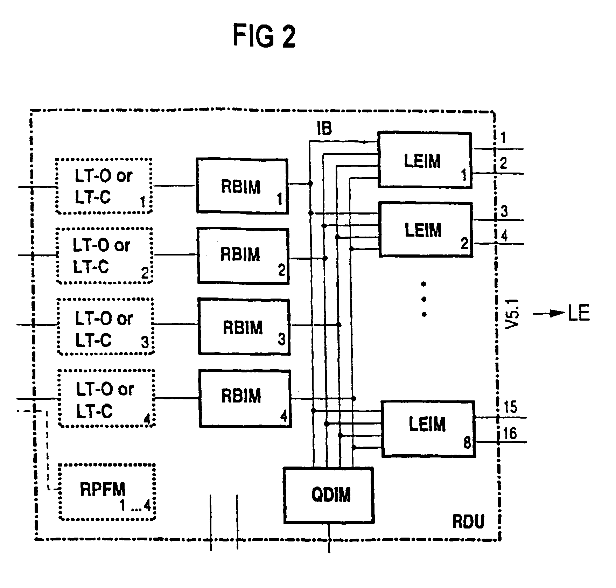

Wie die Figur 2 zeigt, weist eine erfindungsgemäß ausgebildete Funksteuereinheit RDU vermittlungsstellenseitig als Ausfalleinheit konzipierte Schnittstelleneinheiten LEIM1 bis LEIM8 für den Anschluß einer zur Vermittlungsstelle LE führenden Verbindungsleitung auf. Bei einer Minimalausstattung ist nur eine solcher Schnittstelleneinheiten vorhanden. Die Datenbasis dieser Schnittstelleneinheiten enthält im Falle einer Alleinstellung die Teilnehmerdaten der Gesamtheit der über das Teilnehmeranschlußnetz erreichbaren Teilnehmer. In diesem Fall besteht zwischen der Schnittstelleneinheit LEIM und der Vermittlungsstelle LE eine über eine V5.2-Schnittstelle führende Leitungsverbindung. Bei einer über eine V5.1-Schnittstelle führende Leitungsverbindung sind die Teilnehmerdaten auf mehrere vermittlungsseitige Schnittstelleneinheiten LEIM verteilt.

Teilnehmerseitig weist die Funksteuereinheit RDU gemäß Figur 2 wenigstens zwei Schnittstelleneinheiten RBIM auf, die dem Anschluß einer der vorerwähnten Übertragungsstrecken UT dient, über die eine Verbindung mit jeweils einer Einheit RBC und von da mit den daran angeschlossenen Funkbasisstationen RBS besteht. Die Datenbasen der Schnittstelleneinheiten RBIM enthalten die Daten der jeweils zugehörigen Funkbasisstationen RBS.

Sofern die Übertragungsstrecken durch Kupferleitungen oder Lichtleitungen realisiert sind, erfolgt ihr Anschluß an die Funksteuereinheit RDU über Leitungsabschlußschaltungen LT-0 bzw. LT-C.

Weiterer Bestandteil der Funksteuereinheit RDU sind eine Schnittstelleneinheit QDIM, die dem Anschluß eines Systems für Betriebs- und Wartungsaufgaben dient. Von diesem System aus können im Zuge einer Konfigurierung die erwähnten Teilnehmerdaten in die Datenbasis der Schnittstelleneinheiten LEIM bzw. Daten der Funkbasisstationen RBS in die Datenbasis der Schnittstelleneinheit RBIM eingegeben werden.

Bei einer ankommenden, d. h. von der Vermittlungsstelle LE ausgehenden Belegung eines Teilnehmers wird von derjenigen vermittlungsseitigen Schnittstelleneinheiten LEIM aus, die die Daten des betreffenden Teilnehmers in ihrer Datenbasis enthält, an sämtliche teilnehmerseitigen Schnittstelleneinheiten RBIM, die von der vermittlungsseitigen Schnittstelleneinheit aufgrund der entsprechenden Busverbindung erreichbar sind, ein Teilnehmerruf abgegeben und von dort über die Übertragungsstrecke UT an die angeschlossenen Funkbasisstationen RBS weitergeleitet. Es können damit die Teilnehmerstationen von einer beliebigen dieser erreichbaren Funkbasisstationen einen Ruf empfangen. Sie werden daraufhin ein Quittungssignal über die betreffende Funkbasisstation RBS an die eine mit dieser Funkbasisstation verbundene teilnehmerseitige Schnittstelleneinheit RBIM abgeben, die daraufhin das Rufsignal abschaltet und der Teilnehmerstation einen Nutzsignal- und einen Signalisierungskanal zur Herstellung einer Verbindung zuordnet.

Wenn im Zuge einer bestehenden Verbindung die Funkbedingungen zwischen der Teilnehmeranschlußeinheit RNT und der Funkbasisstation RBS einen vorgegebenen Wert unterschreitet, dann kann von der Teilnehmerstation aus ein Wechsel zu einem anderen Kanal aus der Mehrzahl der über dieselbe Basisstation geführten Kanäle (Intra-Cell-Transfer) oder zu einem Funkkanal, der über eine andere Basisstation abgewickelt wird (Inter-Cell-Transfer), gefordert werden. Im letztgenannten Fall ist dann eine andere teilnehmerseitige Schnittstelleneinheit RBIM angesprochen, als diejenige, über die die Verbindung aufgebaut worden ist. Die erstgenannte Schnittstelleneinheit gibt den Umschaltewunsch an sämtliche vermittlungsstellenseitigen Schnittstelleneinheiten LEIM weiter, die von ihr erreicht werden können. Es wird aber nur diejenige Schnittstelleneinheit LEIM reagieren, über die die Verbindung aktiv geführt ist. Im Falle einer V5.2-Schnittstelle ist das jene Schnitttstelleneinheit LEIM, in der die Daten des anfordernden Teilnehmerendgerätes gespeichert sind. Diese Schnittstelleneinheit wird dann eine Umschaltung auf die neue Funkbasisstation RBS veranlassen, indem sie über den neuen Verbindungsweg ein Quittungssignal an das mobile Teilnehmerendgerät sendet und, sobald von dort eine Bestätigung der Umschaltung auf den neuen Funkkanal erhalten ist, die ursprüngliche Verbindung über die andere Funkbasisstation auslöst. Der Verbindungsweg von der Schnittstelleneinheit LEIM zur Vermittlungsstelle LE bleibt dabei unverändert.

Bei einer abgehenden, d. h. von einer Teilnehmerstation ausgehenden Belegung, wird von dieser eine Belegungsmeldung abgegeben, die von einer beliebigen einer Vielzahl von in Frage kommenden Funkbasisstationen RBS aufgenommen und über die betreffende Übertragungsstrecke UT an die zugeordnete teilnehmerseitige Schnittstelleneinheit RBIM weitergegeben wird. Von dort gelangt diese Belegungsmeldung wie im vorstehend geschilderten Fall des Funkzellenwechsels wieder an sämtliche von dieser Schnittstelleneinheit aus erreichbare teilnehmerseitigen Schnittstellenschaltungen LEIM, von denen jedoch nur eine, die die Daten des rufenden Teilnehmers in ihrer Datenbasis aufweist, darauf reagiert. Dies geschieht in Form des Aussendens eines Quittungssignals an den rufenden Teilnehmer und der Abgabe einer Belegungsmeldung an die Vermittlungsstelle LE. Im Falle einer V5.1-Schnittstelle ist dies stets jene Schnittstelleneinheit LEIM, welcher der rufende Teilnehmer fest zugeordnet ist.

Wenn bei dem erfindungsgemäßen Teilnehmeranschlußnetz eine vermittlungsstellenseitige Schnittstelleneinheit LEIM der Funksteuereinheit RDU ausfällt, so sind dadurch, daß diese Schnittstelleneinheit als Ausfalleinheit konzipiert ist, nicht mehr als die zulässige Anzahl von Teilnehmern betroffen.

Kommt es zu einem Ausfall einer teilnehmerseitigen Schnittstelleneinheit RBIM, so bleibt die Möglichkeit für einen Verbindungsaufbau zumindest für sämtliche fest angeschlossenen Teilnehmerstationen erhalten, da erfindungsgemäß die Teilnehmeranschlußeinheiten so installiert sind, daß sie Funkbasisstationen erreichen können, die mit verschiedenen teilnehmerseitigen Schnittstelleneinheiten RBIM in Verbindung stehen.

Es ist auch denkbar, daß aus diesem Grunde bestehende Verbindungen bei Ausfall einer solchen Schnittstelleneinheit RBIM gerettet werden können. Es ist nämlich festgelegt, daß dann, wenn eine Übertragungsstrecke UT ausfällt, was auch dann der Fall sein wird, wenn die betreffende Schnittstelleneinheit RBIM ausgefallen ist, die Einheit RBC sämtliche an ihr angeschlossenen Funkbasisstationen veranlaßt, den Funkbetrieb zu unterbrechen. Die Teilnehmeranschlußeinheiten RNT bzw. die mobilen Teilnehmerendgeräte HDY reagieren hierauf, wie auf die vorstehend behandelte Verschlechterung der Funkbedingungen, d. h. sie fordern einen freien Funkkanal von einer anderen für sie erreichbaren Funkbasisstation an, von der aus im Erfolgsfall der Aufbau eines neuen Verbindungsweges über eine andere Übertragungsstrecke UT und eine andere Schnittstelleneinheit RBIM eingeleitet wird.

## Patentansprüche

1. Teilnehmeranschlußnetz für den Anschluß von Teilnehmerstationen an eine Fernmeldevermittlungsstelle (LE), das ein Funksystem zur Herstellung der Anschlußverbindungen umfaßt, dessen Luftschnittstelle zwischen ortsfesten Teilnehmeranschlußeinheiten (RNT) für Teilnehmerendgeräte (TLN) und/oder mobilen Teilnehmerendgeräten (HDY) und Funkbasisstationen (RBS) besteht, die jeweils zur Bedienung mehrerer Teilnehmerendgeräte (TLN; HDY) ausgelegt sind und über eine Übertragungsstrecke (UT) mit vermittlungsnahen Funksteuereinheiten (RDU) in Verbindung stehen, wobei die Verbindung eines Teilnehmerendgerätes (TLN; HDY) mit der Vermittlungsstelle (LE) wahlweise über wenigstens zwei der Funkbasistationen (RBS) hergestellt werden kann und während einer bestehenden Verbindung unterbrechungsfrei ein Wechsel zu einer anderen Funkbasisstation (RBS) möglich ist,
**gekennzeichnet** durch folgende Merkmale:
die Funksteuereinheiten (RDU) umfassen:
a) vermitttlungsstellenseitig wenigstens eine als Ausfalleinheit konzipierte Schnittstelleneinheit (LEIM) für den Anschluß einer zur Vermittlungsstelle (LE) führenden Verbindungsleitung, deren Datenbasis die Teilnehmerdaten enthält,
b) teilnehmerseitig wenigstens zwei Schnittstelleneinheiten (RBIM) für den Anschluß einer mit wenigstens einer Funkbasisstation (RBS) verbindenden Übertragungsstrecke (UT), deren Datenbasis die Daten der betreffenden Funkbasisstation enthält,
c) eine Schnittstelleneinheit (QDIM) für den Anschluß eines Systems für Betriebs- und Wartungsaufgaben, und
d) ein Mehrfach-Bussystem (IB) mit wenigstens zwei Einzelbussystemen zur Verbindung der Schnittstelleneinheiten gemäß den Merkmalen a) bis c), wobei die Schnittstelleneinheiten (RBIM) gemäß Merkmal b) auf mindestens eines dieser Einzel-Bussysteme, die Schnittstelleneinheiten (LEIM) gemäß Merkmal a) auf wenigstens zwei und die Schnittstelleneinheit (QDIM) gemäß Merkmal c) auf alle dieser Einzelbussysteme Zugriff haben,
wobei aufgrund der räumlichen Anordnung der Funkbasisstationen (RBS) von einer Teilnehmerstation aus wenigstens zwei über verschiedene Übertragungsstrecken mit einer Funksteuereinheit verbundene Funkbasisstationen erreicht werden.

2. Teilnehmeranschlußnetz nach Anspruch 1,
**gekennzeichnet** durch folgende Merkmale:
a) bei einer ankommenden Belegung wird der Teilnehmerruf von der vermittlungsseitigen Schnittstelleneinheit (LEIM) an wenigstens eine Gruppe von teilnehmerseitigen Schnittstelleneinheiten (RBIM) und von dort an die von diesen gesteuerten Funkbasisstationen (RBS) weitergeleitet, so daß die Teilnehmerstationen von einer beliebigen dieser betreffenden Funkbasisstation einen Ruf empfangen können, auf das hin sie ein Quittungssignal an die betreffende aussendende Schnittstelle (RBIM) abgeben, die daraufhin das Rufsignal abschaltet und der Teilnehmerstation einen Nutzkanal und einen Signalisierungskanal zuordnet,
b) bei einer abgehenden Belegung wird die von der Teilnehmerstation abgegebene Belegungsmeldung von einer beliebigen Funkbasisstation (RBS) aufgenommen und an die sie steuernde teilnehmerseitige Schnittstelleneinheit (RBIM) weitergeleitet, die sie an sämtliche von ihr erreichbare vermittlungsseitigen Schnittstelleneinheiten (LEIM) sendet, von denen diejenige, in deren Datenbasis die Teilnehmerdaten der rufenden Teilnehmerstationen enthalten sind, ein Quitttungssignal aussendet und die Belegungsmeldung an die Vermittlungsstelle (LE) weitergibt.

## Claims

1. Customer access network for connecting subscriber stations to a telecommunication exchange (LE) which comprises a radio system for setting up the connections, the air interface of which system is between fixed subscriber line units (RNT) for subscriber terminals (TLN) and/or mobile subscriber terminals (HDY) and radio base stations (RBS) which are each configured to serve a plurality of subscriber terminals (TLN; HDY) and are connected, via a transmission link (UT), to radio control units (RDU) which are near the telecommunication exchange, it being possible to set up the connection of a subscriber terminal (TLN; HDY) to the telecommunication exchange (LE) as desired via at least two of the radio base stations (RBS) and it being possible to change to another radio base station (RBS) without interruption during an existing connection, characterized by the following features:
the radio control units (RDU) comprise:
a) at the telecommunication-exchange end, at least one interface unit (LEIM), conceived as a downtime unit, for connecting a connection line which leads to the telecommunication exchange (LE) and whose database contains the subscriber data,
b) at the subscriber end, at least two interface units (RBIM) for connecting a transmission link (UT), which connects to at least one radio base station (RBS) and whose database contains the data of the respective radio base station,
c) an interface unit (QDIM) for connecting a system for operational and maintenance tasks, and
d) a multiple bus system (IB) having at least two individual bus systems for connecting the interface units in accordance with features a) to c), the interface units (RBIM) in accordance with feature b) having access to at least one of these individual bus systems, the interface units (LEIM) in accordance with feature a) having access to at least two and the interface unit (QDIM) in accordance with feature c) having access to all of these individual bus systems, in which case, owing to the spatial arrangement of the radio base stations (RBS), at least two radio base stations which are connected to a radio control unit via various transmission links are reached from one subscriber station.

2. Customer access network according to Claim 1, characterized by the following features:
a) when there is an incoming seizure, the subscriber call is passed on from the telecommunication-exchange-end interface unit (LEIM) to at least one group of subscriber-end interface units (RBIM) and from there to the radio base stations (RBS) controlled by said units (RBIM), with the result that the subscriber stations can receive a call from any of these respective radio base stations in response to which they output an acknowledgement signal to the respective transmitting interface (RBIM), which in response switches off the call signal and assigns the subscriber station a useful channel and a signalling channel,
b) when there is an outgoing seizure, the seizure message which is emitted by the subscriber station is received by any radio base station (RBS) and is passed on to the subscriber-end interface unit (RBIM) controlling it, which interface unit (RBIM) transmits it to all the telecommunication-exchange-end interface units (LEIM) which can be reached by it, of which interface units (LEIM) the one in whose database the subscriber data of the calling subscriber stations are contained transmits an acknowledgement signal and passes on the seizure message to the telecommunication exchange (LE).

## Revendications

1. Réseau de raccordement d'abonnés pour le raccordement de postes d'abonnés à un central (LE) de télécommunication, qui comprend un système radio pour la production des liaisons de raccordement dont l'interface radio existe entre des unités (RNT) de raccordement d'abonnés à postes fixes pour des terminaux (TLN) d'abonnés et/ou des terminaux (HDY) d'abonnés mobiles et des stations (RBS) de base radios qui sont conçues respectivement pour desservir plusieurs terminaux (TLN ; HDY) d'abonnés et qui sont en liaison par l'intermédiaire d'une voie (UT) de transmission avec des unités (RDU) de commande radio proches du central, la liaison d'un terminal (TLN ; HDY) d'abonnés avec le central (LE) de commutation pouvant être produite au choix par l'intermédiaire d'au moins deux des stations (RBS) de base radio, et un passage à une autre station (RBS) de base radio étant possible sans interruption pendant une liaison en cours,
caractérisé par les dispositions suivantes :
les unités (RDU) de commande radio comprennent :
a) côté central de commutation au moins une unité (LEIM) d'interface, conçue comme unité de panne, pour le raccordement d'une ligne de liaison allant au central (LE) de commutation, dont la base de données contient les données d'abonnés,
b) côté abonné au moins deux unités (RBIM) d'interface pour le raccordement d'une voie (UT) de transmission reliant à au moins une station (RBS) de base radio, dont la base de données contient les données de la station de base radio concernée,
c) une unité (QDIM) d'interface pour le raccordement d'un système pour des tâches d'exploitation et des tâches d'entretien, et
d) un système (IB) de bus multiple comportant au moins deux systèmes de bus simples pour la liaison des unités d'interface suivant les dispositions a) à c), les unités (RBIM) d'interface suivant la disposition b) ayant accès au moins à l'un de ces systèmes de bus simples, les unités (LEIM) d'interface suivant la disposition a) ayant accès à au moins deux de ces systèmes et l'unité (QDIM) d'interface suivant la disposition c) ayant accès à tous ces systèmes de bus simples,
au moins deux stations de base radios reliées par l'intermédiaire de diverses voies de transmission à une unité de commande radio pouvant être atteintes par un poste d'abonné en raison de la disposition dans l'espace des stations (RBS) de base radios.

2. Réseau de raccordement d'abonnés suivant la revendication 1,
caractérisé par les dispositions suivantes :
a) dans le cas d'une occupation qui arrive, l'appel d'abonné est retransmis par l'unité (LEIM) d'interface côté central à au moins un groupe d'unités (RBIM) d'interface côté abonné et de là aux stations (RBS) de base radios commandées par celle-ci, si bien que les postes d'abonnés peuvent recevoir de l'une quelconque des ces stations de base concernées un appel à la suite duquel elles émettent un signal d'accusé de réception à destination de l'interface (RBIM) émettrice concernée qui débranche ensuite le signal d'appel et associe au poste d'abonné un canal utile et un canal de signalisation,
b) en cas d'une occupation qui part, la signalisation d'occupation fournie par le poste d'abonné est reçue par l'une quelconque des stations (RBS) de base radios et retransmise à l'unité (RBIM) d'interface côté abonné qui la commande et qui l'envoie à toutes les unités (LEIM) d'interface côté central qui peuvent être atteintes par elle et dont celle dans la base de données de laquelle les données d'abonnés des postes d'abonnés qui appellent sont contenues émet un signal d'accusé de réception et retransmet la signalisation d'occupation au central (LE) de commutation.
